# EUROPEAN PATENT SPECIFICATION

(11) **EP 3 006 773 B1**
(45) Date of publication and mention of the grant of the patent: **27.02.2019**
(21) Application number: 14808178.9
(22) Date of filing: 04.06.2014
(51) Int. Cl.: F16F 15/073, F16B 4/00, F16B 5/02, F16B 43/00, F16F 1/32, F16F 15/02

(54) **VIBRATION ISOLATION STRUCTURE, AND SHIELD PROVIDED WITH VIBRATION ISOLATION STRUCTURE**
SCHWINGUNGSDÄMPFUNGSSTRUKTUR UND ABSCHIRMUNG MIT DER SCHWINGUNGSDÄMPFUNGSSTRUKTUR
STRUCTURE D'ISOLATION CONTRE LES VIBRATIONS, ET PROTECTION POURVUE D'UNE STRUCTURE D'ISOLATION CONTRE LES VIBRATIONS

(30) Priority: 04.06.2013 JP 2013117668
(43) Date of publication of application: 13.04.2016
(73) Proprietor: Nichias Corporation, Tokyo 104-8555 (JP)
(72) Inventor: KATO, Tadakatsu, Tokyo 104-8555 (JP); MISHINA, Sakae, Tokyo 104-8555 (JP)
(74) Representative: Liebetanz, Michael
(86) International application number: PCT/JP2014/002968
(87) International publication number: WO 2014/196196

(56) References cited:
- DE-A1-102004 001 470
- JP-A- 2003 239 936
- JP-A- 2006 084 219
- JP-A- 2012 002 274
- US-A- 3 019 008
- US-A1- 2011 067 952
- US-A1- 2014 301 025

## Description

### Technical Field

The present invention relates to a linking structure that is provided in a linking part between a vibration body that generates vibration and components to be mounted thereon. In particular, the present invention relates to a vibration-isolation structure that suppresses vibration transmitted from the vibration body to the components to be mounted, and to a shield provided with this vibration-isolation structure.

### Background Art

An engine and an exhaust manifold, a turbo charger or the like that are attached to an engine are vibration bodies that vibrate themselves or vibrate by the influence of an engine.

Various components are mounted on such vibration bodies. As examples of such components to be mounted, a shield called as an exhaust manifold cover, a heat insulator or the like can be given.

In general, a shied is provided with two metal plates that are oppositely arranged and a heat-insulating element disposed between these two plates, and is configured to shield transmission of physical energy (e.g. heat, sound) generated by a vibration body to other components surrounding an engine or to the outside of a vehicle.

Such a shield may be broken or may generate abnormal sounds by being directly or indirectly affected by vibration from a vibration body.

In order to avoid the influence by such vibration, a technology is disclosed in which a vibration-isolation structure is applied to a linking part of a vibration body and components to be mounted (for example, Patent Document 1).

For example, in the vibration-isolation structure disclosed in Patent Document 1, vibration is suppressed by allowing a grommet provided with a weight-adjusted weight element (mass damper) to be disposed between the vibration body and the components to be mounted.

Patent Document 2 relates to an insulating isolator for a heat shield having a unitary first land, a bead portion, a second land and a half bead, wherein the first land defines a fastener aperture.

Patent Document 3 relates to a shock mount comprising a mounting plate, a relatively movable supporting member and a plurality of wire damping springs, each of said damping springs comprising a U-shaped body having free terminal ends and a bight portion, said terminal ends and said bight portion movably engaging said mounting plate, said supporting member having means engaging an intermediate portion of said damping springs.

### Related Art Document

### Patent Document

Patent Document 1 JP-A-2004-169733
Patent Document 2 US 2011/067952 A1
Patent Document 3 US 3,019,008 A

### Summary of the Invention

### Problems to be Solved by the Invention

However, by the conventional vibration-isolation structure, the following problems could not be solved.

For example, in order to absorb vibration from a vibration body, it is more advantageous to allow components themselves that constitute the vibration-isolation structure to be formed of an elastic body. However, since components provided around an engine are required to have heat resistance, these components should be formed of a metal. Metal components are not expected to exhibit high elastic effects as those exhibited by rubber components. As a result, absorption of vibration depends exclusively on the elasticity of constituting components themselves.

The present invention has been made in order to solve such problems, and is aimed at providing a vibration-isolation structure capable of absorbing vibration from a vibration body by actively using a configuration that exhibits elasticity though it is formed of a heat-resistant metal, and a shield provided with such a vibration-isolation structure.

### Means for Solving the Problems

In order to solve the above-mentioned problem, the vibration-isolation structure of the present invention has a configuration according to the features of claim 1.

The shield according to the present invention is a shield that is one of the components to be mounted and serves to shield prescribed physical energy emitted from the vibration body, and is provided with the above-mentioned vibration-isolation structure.

### Advantageous Effects of the Invention

According to the vibration-isolation structure and the shield provided with the vibration-insulation structure according to the present invention, a vibration body contact part and a slit that is formed such that it surrounds the vibration body contact part are provided, and a bridge part formed by these exhibits elasticity, and as a result, vibration from a vibration body is absorbed, whereby transmission of the vibration to components to be mounted can be suppressed.

### Brief Description of the Drawings

FIG. 1 is a perspective view of a vibration-isolation structural body that constitutes a vibration-isolation structure according to a first embodiment of the present invention;
FIG. 2 is a view of a vibration-isolation structural body constituting the vibration-isolation structure according to a first embodiment of the present invention, in which (a) is a front view, (b) is a right lateral view, (c) is a bottom view and (d) is a dimensional view;
FIG. 3 is a cross-sectional view of a vibration-isolation structural body constituting the vibration-isolation structure according to a first embodiment of the present invention, in which (a) is a cross-sectional view taken along line A-A; (b) is a cross-sectional view taken along line B-B; and (c) is a cross-sectional view taken along line C-C;
FIG. 4 is a cross-sectional view taken along line A-A of a vibration-isolation structural body constituting a modification example of the vibration-isolation structure according to a first embodiment of the present invention;
FIG. 5 is an assembled perspective view showing the relationship between a vibration-isolation structural body constituting the vibration-isolation structure according to a first embodiment of the present invention;
FIG. 6 is a perspective view for explaining the method for attaching the vibration-isolation structural body constituting the vibration-isolation structure according to a first embodiment of the present invention to a main body of a shield, in which (a) is a view showing a state in which an engagement claw is inserted into an engagement hole and (b) is a view showing a state in which an engagement claw is bent and connected;
FIG. 7 is a cross-sectional view showing a state in which the vibration-isolation structural body constituting the vibration-isolation structure according to a first embodiment of the present invention is connected with the vibration-isolation structural body itself without connecting with a main body of a shield;
FIG. 8 is a perspective view of the shield main body that is provided with the vibration-isolation structure according to a first embodiment of the present invention;
FIG. 9 is a perspective view of the shield according to a second embodiment of the present invention;
FIG. 10 is a perspective view of the vibration-isolation structure according to a second embodiment of the present invention;
FIG. 11 is a partially-cutaway view of essential parts of the vibration-isolation structure according to a second embodiment of the present invention, in which (a) is a partially-cutaway front view of essential parts; (b) is a partially-cutaway right lateral view of essential parts; (c) is a partially-cutaway bottom view of essential parts; and (d) is a dimensional view;
FIG. 12 is a cross-sectional view of the vibration-isolation structure according to a second embodiment of the present invention, in which (a) is a cross-sectional view taken along line X-X; (b) is a cross-sectional view taken along line Y-Y; and (c) is a cross-sectional view taken along line Z-Z;
FIG. 13 is a cross-sectional view taken along line X-X of a modification example of the vibration-isolation structure according to a second embodiment of the present invention; and
FIG. 14 is an assembled perspective view showing the relationship between the shield, the vibration body and the fastener according to a second embodiment of the present invention.

### Mode for Carrying out the Invention

Hereinbelow, preferred embodiments of the vibration-isolation structure and the shield provided with the vibration-isolation structure according to the present invention will be explained with reference to the drawings.

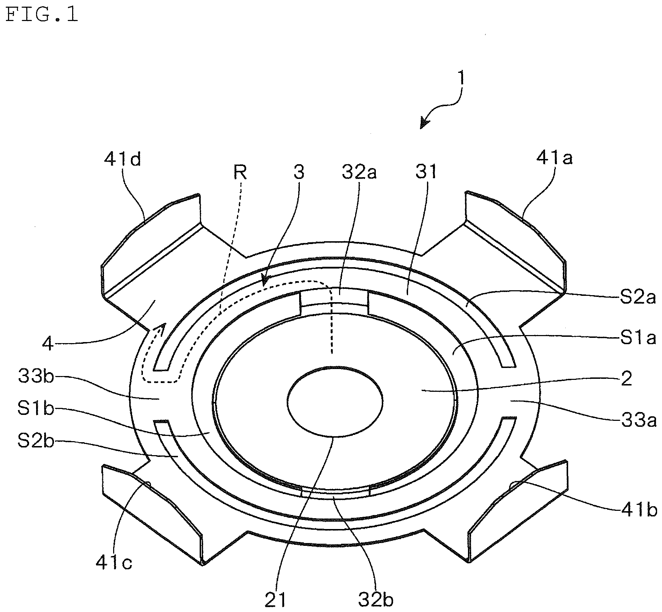

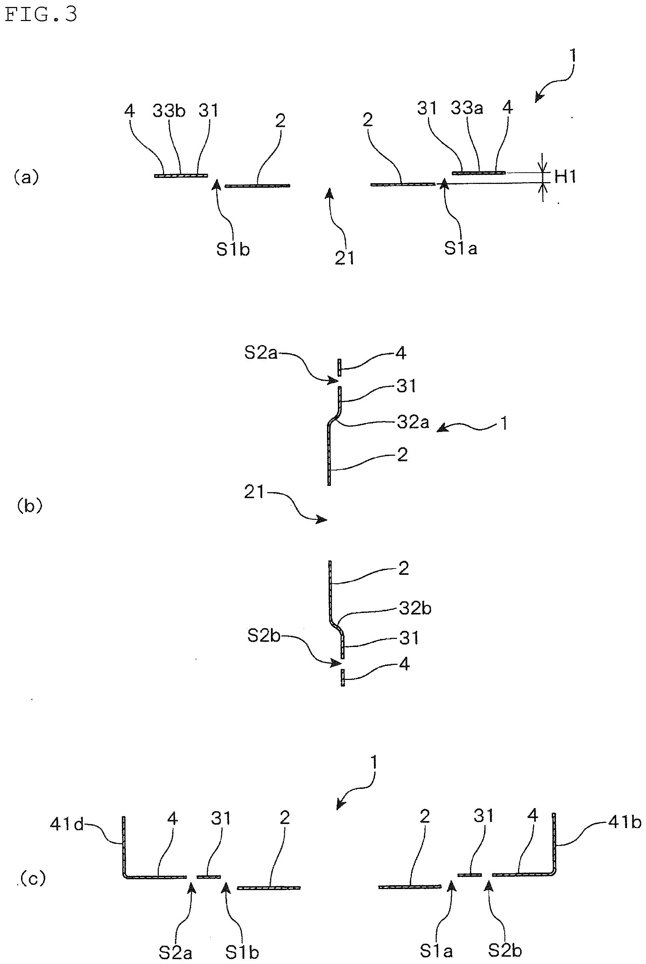

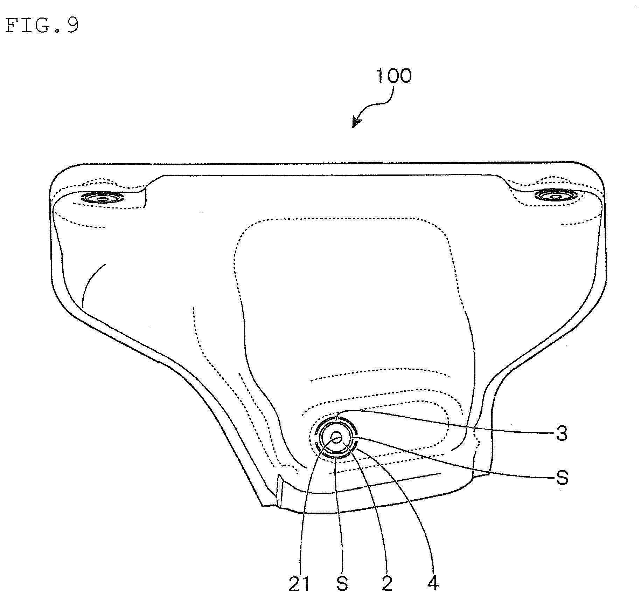

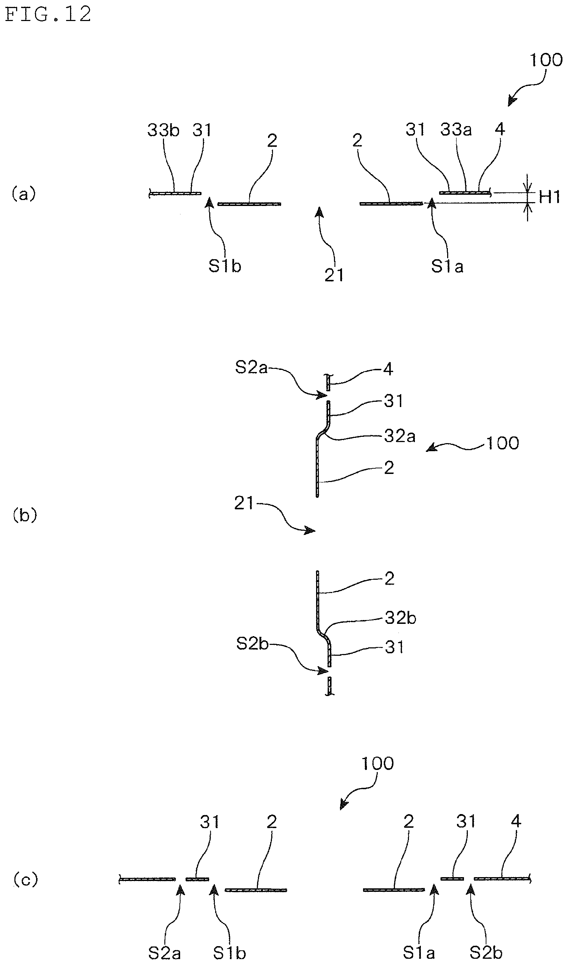

FIGs. 1 to 8 each show a first embodiment of the present invention, and FIGs. 9 to 14 each show a second embodiment of the present invention.

The vibration-isolation structure according to these embodiments are applied to a shield 100 that is attached to a vibration body 200 such as an engine, and an exhaust manifold, a turbo charger or the like to be attached to an engine.

The vibration body 200 such as an engine, an exhaust manifold, a turbo charger or the like generate not only vibration but also physical energy such as sound and heat accompanied by the vibration. Therefore, the shield 100 is configured such that it prevents transmission of such physical energy to other components around an engine or to the outside of the car.

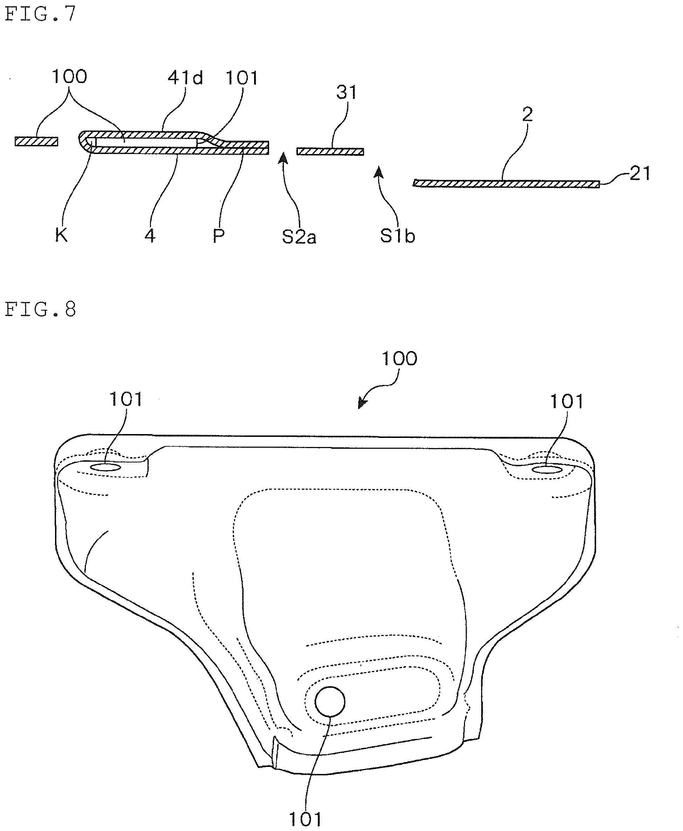

Specifically, the shield 100 is provided with two metal plates that are oppositely arranged and plural components such as plate-like heat-insulating elements disposed therebetween, and as shown in FIG. 8 and FIG. 9, it has a shape of a cover that covers the vibration body 200 partially or entirely.

Such shield 100 can be produced by sandwiching a heat-insulating element between two metal plates that has been processed in advance into a shape that suits to the external shape of the vibration body 200, and folding back the peripheral edges of the two metal plates together, for example.

### [First Embodiment]

The vibration-isolation structure according to a first embodiment of the present invention is applied to the vibration-isolation structural body 1 that is configured as one of components of the above-mentioned shield 100. Due to provision of the vibration-isolation structural body 1 in a linking part between the shield 100 and the vibration body 200, vibration transmitted from the vibration body 200 to the shield 100 can be suppressed.

Hereinbelow, the vibration-isolation structural body 1 that operates as the vibration-isolation structure will be explained.

As shown in each figure, the vibration-isolation structural body 1 according to this embodiment is formed of a flat plate element having a disc-like shape that can be engaged with an installation hole 101 formed in the main body of the shield 100.

For example, the vibration-isolation structural body 1 has an outer shape having a size of D (= 12 to 100 (mm)) and a plate thickness of 0.05 to 1.20 (mm).

Further, since the vibration-isolation structural body 1 is provided in a linking part that links the shield 100 and the vibration body 200, it is formed of a metal material that has not only rigidity but also heat resistance; e.g. spring steel made of stainless steel, magnesium, iron, alloys thereof or the like or spring steel obtained by subjecting these to plating, etc.

Although it is impossible to expect that such a metal-made plate material exhibits as high elastic effects as those attained by an elastic body such as rubber, the vibration-isolation structural body 1 according to this embodiment has the following characteristic configurations in order to absorb vibration transmitted from the vibration body 200 to the shield 100.

Specifically, as a characteristic configuration, the vibration-isolation structural body 1 has a vibration body contact part 2, a peripheral part 4, a slit S and a bridge part 3.

The vibration body contact part 2 is a part that is brought into contact with the vibration body 200, and is provided with an insertion hole 21 through which a fastener 300 (e.g. a bolt, a screw, a rivet) for fixing the shield 100 to the vibration body 200 is inserted.

In this embodiment, the vibration body contact part 2 has a circular shape. The vibration body contact part 2 may be of other shapes such as a square.

The peripheral part 4 is a part that is positioned on the periphery of the vibration-isolation structural body 1 and is brought into contact with the main body of the shield 100. The peripheral part 4 is provided with engagement claws 41 (41a to 41d) that are inserted into engagement holes 102 formed around an installation hole 101 of the shield 100, and then bent to be engaged with the main body of the shield 100.

The engagement claws 41a to 41d are provided almost vertically relative to the surface direction of the peripheral part 4, and in order to allow the vibration transmitted from the vibration body 200 to be dispersed equally, four engagement claws 41 are arranged at equal intervals (e.g. 90 degrees) on the circumference of a circle having a prescribed radius around the insertion hole 21.

As mentioned above, although it is preferred that the engagement claws 41a to 41d be arranged at equal intervals, the number thereof is not limited to 4.

The slits S (S1, S2) are opening parts that are arranged between the vibration body contact part 2 and the peripheral part 4, and are formed such that they surround the vibration body contact part 2 in one or two or more rows.

In this embodiment, the slits S (S1, S2) are formed in the shape of an arc that extends along the circumference of a circle having a prescribed radius around the insertion hole 21 (e.g. the radius of the inside of S1 (RS1) = 9 (mm), the radius of the inside of S2 (RS2) = 12.5 (mm)), and two slits S1 and S2 are formed such that they surround the vibration body contact part 2 in two rows.

The two slits S1 and S2 are independently separated by the bridge part 3. The slit S1 is formed of slits S1a and S1b and the slit S2 is formed of slits S2a and S2b.

The slit S1a and the slit S1b have a width (WS1) of 0.5 to 5.0 (mm) and the slit S2a and the slit S2b have a width (WS2) of 0.5 to 5.0 (mm), and are independently open at a prescribed central angle (e.g. AS1, AS2 = about 150 degrees) around the insertion hole 21.

By forming such slits S (S1, S2), the following operational advantages are exhibited.

If the vibration body contact part 2 and the peripheral part 4 adjoin without provision of such slits S (S1, S2), although vibration transmitted from the vibration body contact part 2 increases or decreases by being affected by the distance between them, it is directly transmitted to the peripheral part 4. On the contrary, by providing the slits S (S1, S2) as in this embodiment, part of vibration is released from the peripheral part of the slit S, and as a result, vibration transmitted from the vibration body contact part 2 to the peripheral part 4 is attenuated.

As for the slit S, as the number thereof increases, the vibration transmitted to the peripheral part 4 is attenuated. Therefore, the slit S is preferably formed in two rows rather than one row. Forming in two or more rows is preferable.

As in this embodiment, the slit S (S1, S2) is preferably formed in a shape that extends along the circumference of a circle having a prescribed radius around the insertion hole 21. It may be formed in a shape that extends along a regular polygon (e.g. square) around the insertion hole 21.

Further, in this embodiment, in the peripheral part of the slit S (S1, S2), an acute- or obtuse-angled edge part is formed. In order to avoid generation of cracks, a corner R may be formed in this part.

The bridge part 3 is a part that bridges the vibration body contact part 2 and the peripheral part 4. In this embodiment, it is formed so as to bridge the vibration body contact part 2 and the peripheral part 4 such that route R is formed (see FIG. 1).

Specifically, in this embodiment, an intermediate bridge part 31 arranged between the two slits S1 and S2, a vibration body side bridge part 32 (32a, 32b) that bridges the intermediate bridge part 31 and the vibration body contact part 2, and the peripheral side bridge part 33 (33a, 33b) that bridges the intermediate bridge part 31 and the peripheral part 4 are formed.

Due to the provision of such bridge part 3, vibration from the vibration body contact part 2 is transmitted to the intermediate bridge part 31 through the vibration body side bridge part 32. Further, after going around the intermediate bridge part 31, the vibration is then transmitted to the peripheral part 4 after passing through the peripheral side bridge part 33.

For example, the bridge part 3 is formed in a thin and narrow plate having a width W1 of the intermediate bridge part 31 of W1=0.5 to 10.0 (mm), a width W2 of the vibration body side bridge part 32 of W2=0.5 to 10.0 (mm) and a width W3 of the peripheral side bridge part 33 of W3=0.5 to 10.0 (mm).

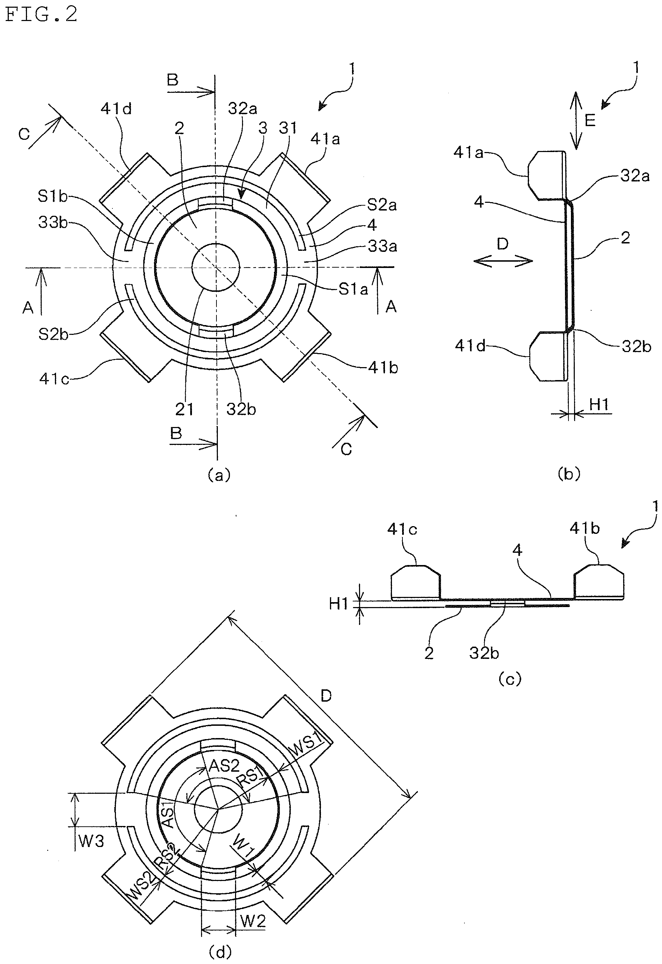

Due to such configuration, the entire bridge part 3 operates as leaf spring, and can absorb vibration in the D direction (a direction perpendicular to the surface direction of the vibration body contact part 2) in FIG. 2(b), for example. In particular, since the route R is formed in an approximate S letter, the bridge part 3 operates as helical leaf spring.

Further, on radial lines that extend around the insertion hole 21, the bridge part 3 has a positional relationship such that it is not positioned on the same radial line (normal line) as that of the engagement claw 41.

For example, the engagement claw 41 and the peripheral side bridge part 33 have a positional relationship that they are not positioned on the same radial line. As a result, a path from the vibration body contact part 2 to the engagement claw part 41 is prolonged, and as a result, it is possible to increase a ratio of vibration that is attenuated in the middle of the path.

Similarly, the engagement claw 41 and the vibration body side bridge part 32 have a positional relationship that they are not positioned on the same radial line. In this case, since the slit S2 is disposed between the engagement claw 41 and the vibration body side bridge part 32, vibration that is transmitted through the vibration body side bride part 32 is not transmitted directly to the engagement claw 41 (at least it detours the intermediate bridge part 31), the engagement claw 41 and the vibration body side bride part 32 can be arranged on the same radial line.

Further, the vibration body side bridge parts 32a and 32b and the peripheral side bridge parts 33a and 33b are arranged such that they orthogonally cross in a crosswise manner as viewed from the front.

As a result, vibration from the vibration body contact part 2 is transmitted to the peripheral part 4 after passing the longest path, and as a result, a ratio of attenuation can further be increased.

In this embodiment, the vibration body side bridge part 32 and the peripheral side bridge part 33 are provided respectively in a quantity of two. The number of each of the vibration body side bridge part 32 and the peripheral side bridge part 33 is not limited to two.

Further, in a path from the vibration body contact part 2 to the peripheral part 4, a step having a prescribed gradient against the contact surface (backside of the vibration body contact part 2) that is in contact with the vibration body 200 of the vibration body contact part 2 is provided.

Specifically, in this embodiment, the vibration body side bridge parts 32 (32a, 32b) are formed as a step, and bridge the vibration body contact part 2 and the intermediate bridge part 31 with a prescribed gradient (e.g. a gradient of about 45 degrees relative to the surface direction of the vibration body contact part 2) such that a difference in height of H1 (e.g. 0 to 2 (mm)) is formed in a direction perpendicular to the surface direction of the vibration body contact part 2.

As mentioned above, by providing a step in a path from the vibration body contact part 2 to the peripheral part 4, this step absorbs vibration in the E direction (surface direction of the vibration body contact part 2) in FIG. 2(b), and as a result, vibration that is transmitted from the vibration body 200 to the shield 100 is further suppressed.

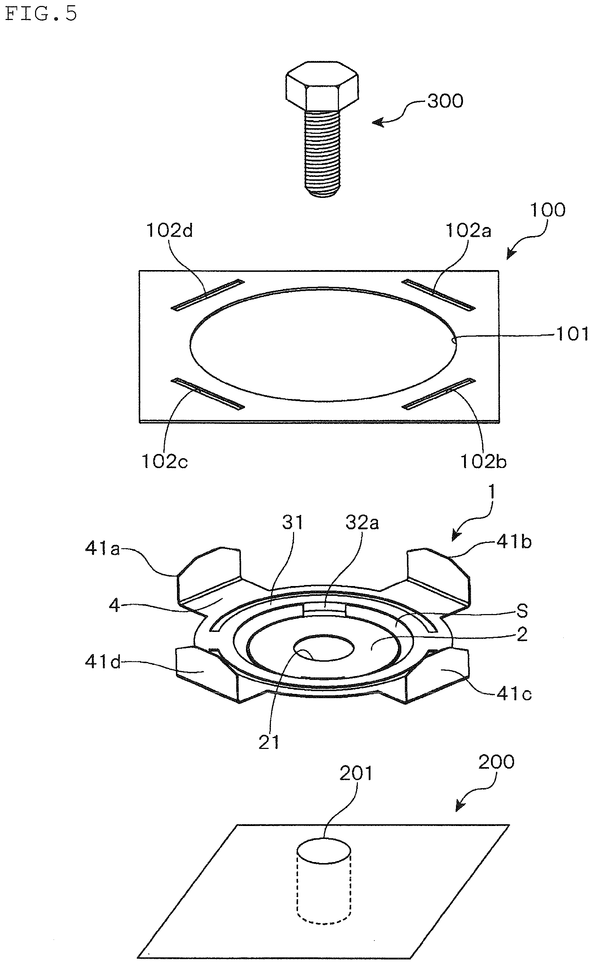

Further, due to the presence of such a step, a difference in height H1 is formed between the vibration body contact part 2 and the peripheral part 4. For example, when the shield 100 is attached to the vibration body 200 with a positional relationship shown in FIG. 5, for example, since the peripheral part 4 is positioned higher than the vibration body contact part 2 by H1 (upper part in the figure), it is possible to allow the main body of the shield 100 to be remote (float) from the vibration body 200 for a distance corresponding to a difference in height H1, direct transmission of physical energy from the vibration body 200 to the main body of the shield 100 can be avoided.

Further, as a modification example of this embodiment, the peripheral side bridge parts 33 (33a, 33b) can be formed as a step.

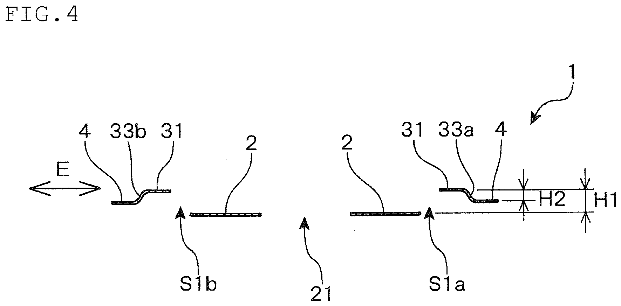

For example, as shown in FIG. 4, in order to allow a difference in height of H2 (e.g. 0 to 2 (mm)) to be formed between the intermediate bridge part 31 and the peripheral part 4 in a direction perpendicular to the surface direction of the vibration body contact part 2, the peripheral side contact parts 33 (33a, 33b) can be bridged with a prescribed gradient.

In this case, the intermediate bridge part 31 is positioned higher than the peripheral part 4 the shield 100 by H2, by forming the step such that it satisfies H1>H2, the main body of the shield 100 can be remote from the vibration body 200 for a distance corresponding to the difference in height (H2-H1).

The step can be provided not only in the vibration body side bridge part 32 and the peripheral side bridge part 33 but also in the intermediate bridge part 31. For example, by subjecting the intermediate bridge part 31 to corrugation processing, plural steps can be formed in the intermediate bridge part 31.

The vibration-isolation structural body 1 as configured above is assembled as follows while keeping the positional relationship shown in FIG. 5.

Specifically, the vibration-isolation structural body 1 is attached to the shield 100 first. The fastener 300 such as a bolt is inserted into the insertion hole 21, and this fastener 300 is screwed into the fixation hole 201 formed in the vibration body 200. As a result, it is possible to attach the shield 100 to the vibration body 200 with the vibration-structural body 1 as a linking component being disposed between the shield 100 and the vibration body 200.

In the shield 100 thus attached, since vibration from the vibration body 200 is transmitted through the vibration-isolation structural body 1, each part of the above-mentioned vibration-structural body 1 cooperatively moves organically, vibration transmitted from the vibration body 200 to the main body of the shield 100 is suppressed as follows.

First, vibration from the vibration body 200 is directly transmitted to the vibration body contact part 2 that contacts the vibration body 200.

However, the vibration body contact part 2 and the peripheral part 4 do not adjoin, and the slits S1 and S2 are disposed therebetween. As a result, part of vibration from the vibration body 200 is diffused from the peripheral part of the slits S1 and S2, and as a result, vibration transmitted from the vibration body contact part 2 to the peripheral part 4 is attenuated.

Further, the vibration body contact part 2 and the peripheral part 4 are connected through the bridge part 3. The bridge part 3 is formed in a thin and narrow plate with a prescribed width, and hence it has flexibility. Due to operation of the bride part 3 as leaf spring, vibration in the D direction is absorbed, for example (see FIG. 2(b)).

Further, since the bridge part 3 is provided with the vibration body side bridge part 32 formed as a step, vibration in the E direction is absorbed, for example (see FIG. 2(b)).

Further, since the bridge part 3 is formed such that it has a vibration transmission path of route R in an approximate S letter, the transmission path of vibration transmitted from the vibration body contact part 2 to the peripheral part 4 is made as long as possible, thereby to accelerate attenuation of the vibration in the midst of the path.

In this way, due to organic cooperative movement of each part of the vibration-isolation structural body 1, vibration from the vibration body 200 is transmitted to the main body of the shield 100 in an attenuated way, whereby transmission of vibration is suppressed.

Such vibration-isolation structural body 1 is one of components that constitute the shield 100, and is put on the market in a state in which it is attached to the main body of the shield 100.

The vibration-isolation structural body 1 as a primary component can be produced by punching a metal-made flat plate element into an external shape shown in FIG. 2(a) by means of a pressing machine, for example.

Such vibration-isolation structural body 1 is attached to the main body of the shield 100 as mentioned below, and as a result, the shield 100 as a final form is produced.

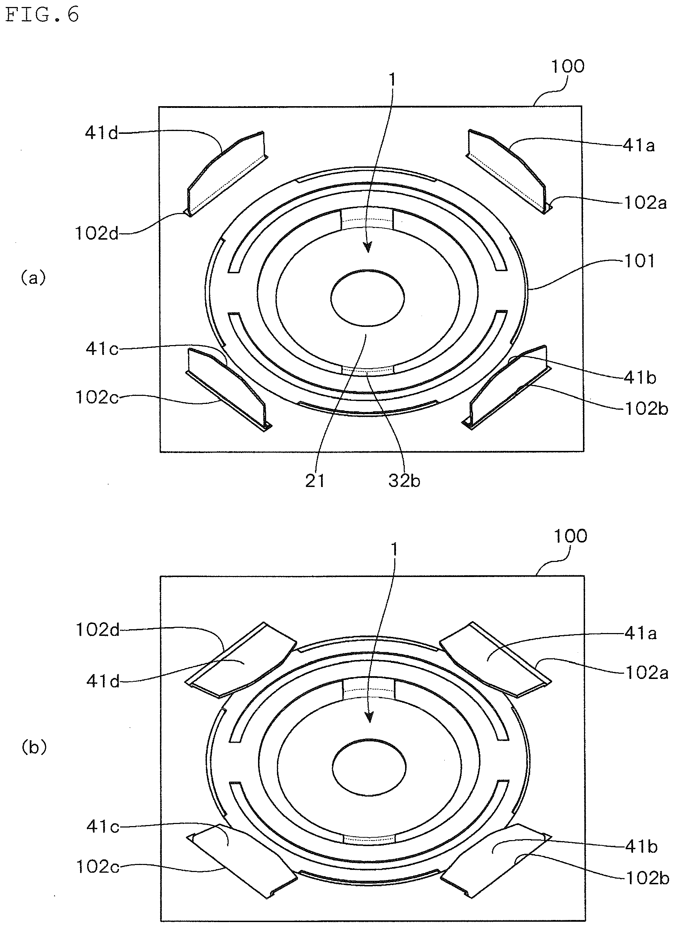

First, as shown in FIG. 6(a), engagement claws 41a to 41d are respectively inserted into engagement holes 102a to 102d formed in the main body of the shield 100.

Subsequently, by means of a pressing machine or the like, the engagement claws 41a to 41d are bent by pressing while inclining towards the insertion hole 21 such that they are brought into contact with the main body of the shield 100. As a result, as shown in FIG. 6(b), the engagement claws 41a to 41d are engaged with the engagement holes 102a to 102d, whereby the vibration-isolation structural body 1 is integrated with the main body of the shield 100.

Further, by connecting the engagement claws 41a to 41d to prescribed parts, it becomes possible to allow the vibration-isolation structural body 1 to be un-detachable from the main body of the shield 100.

Specifically, the engagement claws 41a to 41d are connected to only the peripheral part of the installation hole 101, both of the peripheral part of the insertion hole 101 and the peripheral part 4, or only the peripheral part 4, whereby the vibration-isolation structural body 1 is allowed to be un-detachable from the main body of the shield 100.

In particular, as shown in FIG. 7, it is preferred that the engagement claw 41 be connected only to the peripheral part 4 without connecting it to the peripheral part of the installation hole 101.

For example, at point P shown in FIG. 7 (corresponding to a part where the tip side of the engagement claw 41 and the peripheral part 4 are overlapped in FIG. 6(b)), the tip side of the engagement claw 41d and the peripheral part 4 are connected. As a result, in the inner part of the engagement claw 41d that has been bent, a surrounding space K that surrounds the peripheral part of the insertion hole 101 is formed.

By forming such surrounding space K, the peripheral part of the insertion hole 101 (main body of the shield 100) can be swung although it is constrained within this surrounding space K. As a result, vibration from the vibration body 1 is transmitted to the main body of the shield 100 with a play, and therefore vibration from the vibration body 200 to the shield 100 is transmitted in a further attenuated way.

Due to such connection, the vibration-isolation structural body 1 is integrated with the main body of the shield 100, whereby the shield 100 as a final form is produced.

As the method for connecting, an appropriate method can be selected from various connection methods including welding (e.g. spot welding), deposition, bonding or the like.

As mentioned above, according to the vibration-isolation structure and the shield provided with this structure according to this embodiment, due to provision of the slit S between the vibration body contact part 2 and the peripheral part 4, and exertion of elasticity by the bridge part 3 that is bridged between them, vibration from the vibration body 200 is absorbed and attenuated, whereby transmission to the shield 100 can be suppressed.

### [Second Embodiment]

Next, an explanation will be made on the second embodiment of the present invention. In the first embodiment, by providing the vibration-isolation structural body 1 that is configured as one component of the shield 100 in the linking part of the shield 100 and the vibration body 200, vibration transmitted from the vibration body 200 to the shield 100 is suppressed. On the other hand, in this embodiment, by forming characteristic shapes of the vibration-isolation structural body 1 of the first embodiment in the linking part of the shield 100 and the vibration body 200, vibration transmitted from the vibration body 200 to the main body of the shield 100 excluding the linking part is suppressed.

Hereinbelow, an explanation will be made on the second embodiment. The explanation is made mainly on the differences from the first embodiment. An explanation of the features common to the first embodiment and the second embodiment is appropriately omitted.

In this embodiment, in the linking part of the shield 100 and the vibration body 200, as part of the shield 100, the vibration body contact part 2, the peripheral part 4, the slit S and the bridge part 3 are formed.

The vibration body contact part 2 is a part that is in contact with the vibration body 200, and is provided with the insertion hole 21 through which the fastener 300 (e.g. bolt, screw, rivet) for fastening the shield 100 to the vibration body 200 is inserted.

The peripheral part 4 is formed as a part that is positioned on the periphery of the linking part of the shield 100 and the vibration body 200, and is connected to the main body of the shield 100 excluding the linking part.

The slits S (S1, S2) are openings arranged between the vibration body contact part 2 and the peripheral part 4, and are formed such that they surround the vibration body contact part 2 in one or two or more rows.

In this embodiment, the shape of the vibration body contact part 2 is circular. As in the first embodiment, the shape of the vibration body contact part 2 may be of other shapes such as a square. The specific shape or the like of the slits S (S1, S2) are the same as those in the first embodiment, and hence an explanation therefor is omitted. In this embodiment, by forming the slits S (S1, S2), part of the vibration from the vibration body contact part 2 is diffused from peripheral part of the slit S, whereby vibration transmitted from the vibration body contact part 2 to the peripheral part 4 is attenuated.

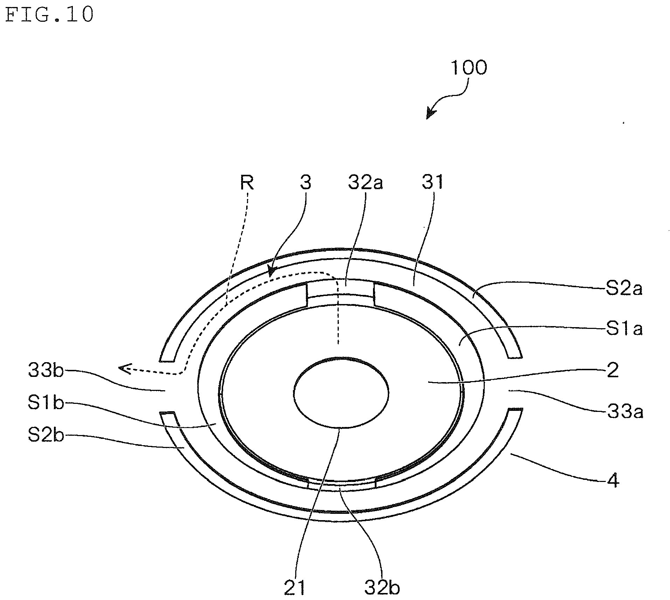

In this embodiment, by forming the slit S (S1, S2), the bridge part 3 that is a part bridging the vibration body contact part 2 and the peripheral part 4 is formed so as to bridge the vibration body contact part 2 and the peripheral part 4 formed in the linking part of the shield 100 and the vibration body 200 such that route R is formed (see FIG. 10).

Specifically, in this embodiment, the intermediate bridge part 31 arranged between the two slits S1 and S2, the vibration body side bridge part 32 (32a, 32b) that bridges the intermediate bridge part 31 and the vibration body contact part 2, and the peripheral side bridge part 33 (33a, 33b) that bridges the intermediate bride part 31 and the peripheral part 4 are formed.

Due to the provision of such bridge part 3, vibration from the vibration contact part 2 is transmitted to the intermediate bridge part 31 after passing through the vibration body side bridge part 32. Further, the vibration goes around the intermediate bridge part 31 that is formed in an arc-like shape, and is then transmitted to the main body of the shield 100 after passing the peripheral side bridge part 33.

Further, the bridge part 3 is formed in a thin and narrow plate such that the width W1 of the intermediate bridge part 31 becomes W1=0.5∼10.0 (mm), the width W2 of the vibration body side bridge part 32 becomes W2=0.5∼10.0 (mm) and the width W3 of the peripheral side bridge part 33 becomes W3=0.5∼10.0 (mm).

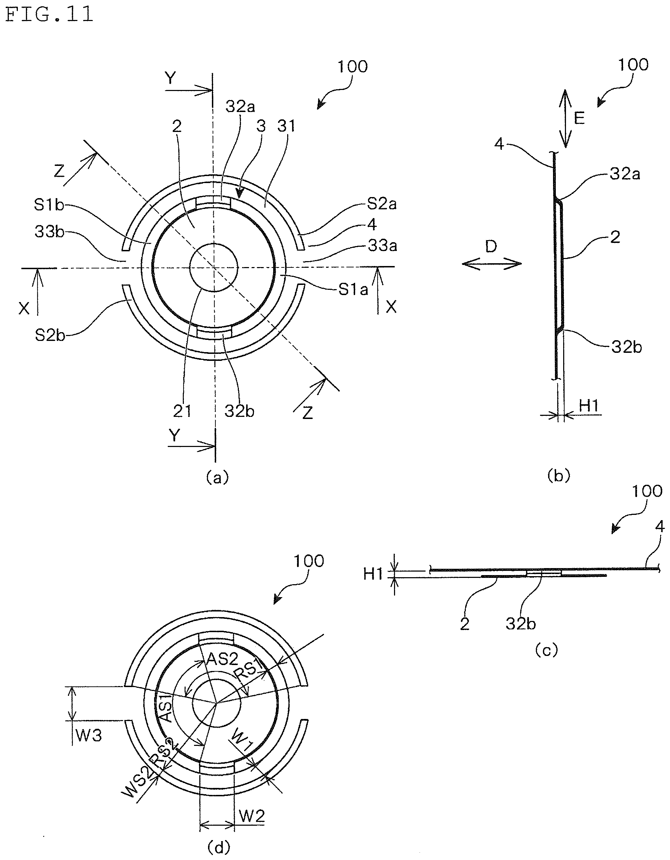

Due to such configuration, the entire bridge part 3 operates as leaf spring, and as a result, it can absorb vibration in the D direction (direction perpendicular to the surface direction of the vibration body contact part 2) in FIG. 11(b), for example. In particular, since route R is formed in an approximate S letter, the bridge part 3 operates as helical leaf spring.

The vibration body side bridge parts 32a and 32b and the peripheral side bridge parts 33a and 33b are arranged such that they cross orthogonally in a crosswise manner as viewed from the front.

As a result, vibration from the vibration body contact part 2 is transmitted to the peripheral part 4 after following the longest path, whereby a ratio of attenuation of vibration can be further increased.

In this embodiment, each of the vibration body side bridge part 32 and the peripheral side bridge part 33 are provided in a quantity of two. The quantity of the vibration body side bridge part 32 and the peripheral side bridge part 33 is not limited thereto.

Further, in a path from the vibration body contact part 2 to the peripheral part 4, a step that has a prescribed gradient relative to the contact surface (back surface of the vibration body contact part 2) that contacts the vibration body 200 of the vibration body contact part 2 is provided.

Specifically, in this embodiment, the vibration body side bridge parts 32 (32a, 32b) are formed as a step, and bridge the vibration body contact part 2 and the intermediate bridge part 31 with a prescribed gradient (e.g. a gradient of about 45 degrees relative to the surface direction of the vibration body contact part 2) such that a difference in height of H1 (e.g. 0 to 2 (mm)) is formed in a direction perpendicular to the surface direction of the vibration body contact part 2.

In this way, in a path from the vibration body contact part 2 to the peripheral part 4, due to the provision of a step, the step absorbs vibration in the E direction (surface direction of the vibration body contact part 2) in FIG. 11(b). As a result, vibration transmitted from the vibration body 200 to the main body of the shield 100 is further suppressed.

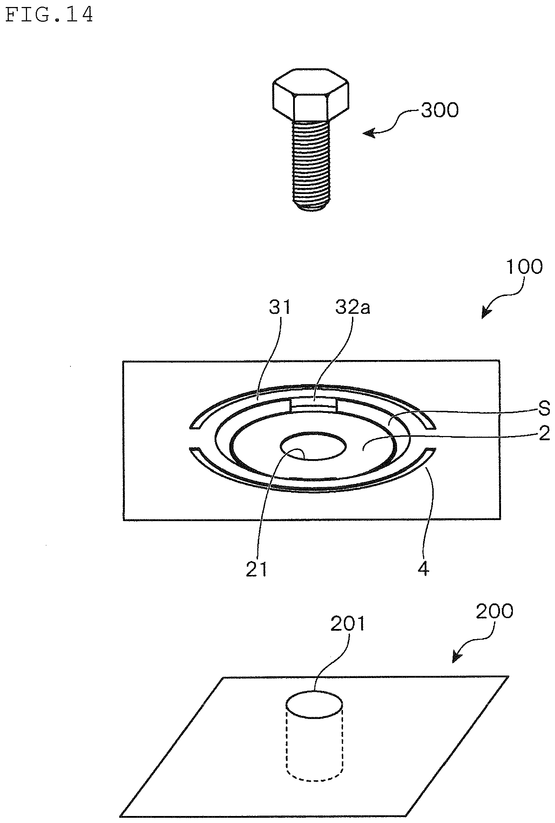

Further, due to the presence of such a step, a difference in height H1 is formed between the vibration body contact part 2 and the peripheral part 4. For example, when the shield 100 is attached to the vibration body 200 with a positional relationship shown in FIG. 14, since the peripheral part 4 is positioned higher than the vibration body contact part 2 by H1 (upper part in the figure), it is possible to allow the main body of the shield 100 to be remote (float) from the vibration body 200 for a distance corresponding to a difference in height H1, direct transmission of physical energy from the vibration body 200 to the main body of the shield 100 can be eliminated.

Further, as a modification example of this embodiment, the peripheral side bridge parts 33 (33a, 33b) can be formed as a step.

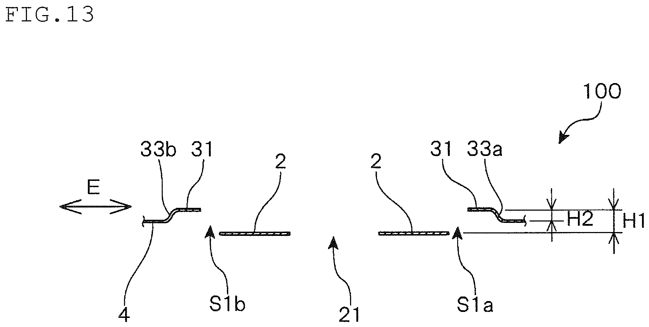

For example, as shown in FIG. 13, in order to allow a difference in height of H2 (e.g. 0 to 2 (mm)) to be formed between the intermediate bridge part 31 and the main body of the shield 100 in a direction perpendicular to the surface direction of the vibration body contact part 2, the peripheral side contact parts 33 (33a, 33b) can be bridged with a prescribed gradient.

In this case, the intermediate bridge part 31 is positioned higher than the main body of the shield 100 by H2, by forming the step such that it satisfies H1>H2, the main body of the shield 100 can be remote from the vibration body 200 for a distance corresponding to the difference in height (H2-H1).

The step can be provided not only in the vibration body side bridge part 32 and the peripheral side bridge part 33 but also in the intermediate bridge part 31. For example, by subjecting the intermediate bridge part 31 to corrugation processing, plural steps can be formed in the intermediate bridge part 31.

In the shield 100 thus configured, while keeping the positional relationship shown in FIG 14, the fastener 300 such as a bolt is inserted into the insertion hole 21, and this fastener 300 is screwed into the fixation hole 201 formed in the vibration body 200. As a result, the shield 100 can be attached to the vibration body 200.

In the shield 100 thus attached, since vibration from the vibration body 200 is transmitted through the linking part mentioned above, each part of the linking part cooperatively moves organically, vibration transmitted from the vibration body 200 to the main body of the shield 100 is suppressed as follows.

First, vibration from the vibration body 200 is directly transmitted to the vibration body contact part 2 that contacts the vibration body 200.

However, the vibration body contact part 2 and the peripheral part 4 do not adjoin, and the slits S1 and S2 are disposed therebetween. As a result, part of vibration from the vibration body 200 is diffused from the peripheral part of the slits S1 and S2, and as a result, vibration transmitted from the vibration body contact part 2 to the peripheral part 4 is attenuated.

Further, the vibration body contact part 2 and the peripheral part 4 are connected through the bridge part 3. The bridge part 3 is formed in a thin and narrow plate with a prescribed width, and hence it has flexibility. Due to operation of the bride part 3 as leaf spring, vibration in the D direction is absorbed, for example (see FIG. 11(b)).

Further, since the bridge part 3 is provided with the vibration body side bridge part 32 formed as a step, vibration in the E direction is absorbed, for example (see FIG. 11(b)).

Further, since the bridge part 3 is formed such that it has a vibration transmission path of route R in an approximate S letter, the transmission path of vibration transmitted from the vibration body contact part 2 to the peripheral part 4 is made as long as possible, thereby to accelerate attenuation of the vibration in the midst of the path.

In this way, due to organic cooperative movement of each part of the linking part of the shield 100 and the vibration body 200, vibration from the vibration body 200 is transmitted to the main body of the shield 100 in an attenuated way, whereby transmission of vibration is suppressed.

As mentioned above, according to this embodiment, due to provision of the slit S between the vibration body contact part 2 and the peripheral part 4 and due to elasticity of the bridge part 3 that is bridged therebetween, vibration from the vibration body 200 is absorbed and attenuated, and transmission of vibration to the shield 100 can be suppressed.

Hereinabove, preferred embodiments of the vibration-isolation structure of the present invention and the shield provided with the structure are explained. The vibration-isolation structure according to the present invention and the shield provided with the structure are not restricted to the above-mentioned embodiments. It is needless to say the various modifications are possible within the scope of the present invention.

For example, in this embodiment, the shield 100 is formed of two metal plates. However, it can be formed by using one or two or more metal plates.

For eliminating concentration of twisting stress on the bridge part 3 caused by screwing of the fastener 300, in order to improve sliding properties of the surface (front and back surfaces) of the vibration body contact part 2, it is possible to subject this part or the entire part to slipping properties improvement processing such as molybdenum coating.

### Industrial Applicability

The present invention can be utilized widely to a shield that covers a vibration generating body that generates vibration, such as engine, an exhaust manifold or a turbo charger attached to the engine.

### Description of the Numerical References

- 1: Vibration-isolation structural body
- 2: Vibration body contact part
- 3: Bridge part
- 31: Intermediate bridge part
- 32 (32a, 32b): Vibration body side bridge part
- 33 (33a, 33b): Peripheral side bridge part
- 4: Peripheral part
- 41 (41a to 41d): Engagement claw
- S(S1, S2): Slit
- 100: Shield
- 101: Installation hole
- 102 (102a to 102d): Engagement hole
- 200: Vibration body
- 201: Fixation hole
- 300: Fastener

## Claims

1. A vibration-isolation structure (2, 3, 4, S) provided in a linking part that links a vibration body (200) that generates vibration and prescribed components to be mounted (100) on the vibration body (200), and suppresses vibration transmitted from the vibration body (200) to the components to be mounted (100), wherein
said vibration-isolation structure (2, 3, 4, S) is provided with a vibration body contact part (2) that contacts the vibration body (200) and has an insertion hole (21) through which a fastener (300) for fastening the components to be mounted (100) to the vibration body (200) is inserted,
a peripheral part (4) that is located on the periphery of the vibration isolation structure (2, 3, 4, S),
a slit (S) that is arranged between the vibration body contact part (2) and the peripheral part (4), and
a bridge part (3) that bridges the vibration body contact part (2) and the peripheral part (4), the slit (S) comprises two slits (S1, S2) formed such that they surround the vibration body contact part (2) in two rows,
the bridge part (3) comprises an intermediate bridge part (31) arranged between the two slits (S1, S2), a vibration body side bridge part (32) that bridges the intermediate bridge part (31) and the vibration body contact part (2), and a peripheral side bridge part (33) that bridges the intermediate bridge part (31) and the peripheral part (4), and is arranged such that a vibration from the vibration body contact part (2) is transmitted to the intermediate bridge part (31) through the vibration body side bridge part (32), after going around the intermediate bridge part (31), the vibration is transmitted to the peripheral part (4) after passing through the peripheral side bridge part (33),
**characterized in that** the two slits (S1, S2) are formed in the shape of an arc that extends along the circumference of a circle having a prescribed radius around the insertion hole (21).

2. The vibration-isolation structure (2, 3, 4, S) according to claim 1, wherein the peripheral part (4) is provided with an engagement claw (41) that is bent after being inserted into an engagement hole (102) formed in the components to be mounted (100) and engaged with the components to be mounted (100), and by engagement of the engagement claw (41) with prescribed parts, the vibration-isolation structure (2, 3, 4 S) is integrated with the components to be mounted (100).

3. The vibration-isolation structure (2, 3, 4, S) according to claim 2, wherein the engagement claw (41) is connected to a prescribed part that constitutes the vibration-isolation structure (2, 3, 4, S) without being connected to the components to be mounted (100), and
a surrounding space that surrounds part of the components to be mounted (100) is formed inside of the engagement claw (41) that is bent.

4. The vibration-isolation structure (2, 3, 4, S) according to claim 2 or 3, wherein, on a radial line extending from the insertion hole (21) serving as a central point, the bridge part (3) and the engagement claw (41) have a positional relationship such that they are not positioned on the same radial line as long as they do not sandwich the slit.

5. The vibration-isolation structure (2, 3, 4, S) according to claim 1, that is provided in the linking part as part of the components to be mounted (100), and
the peripheral part (4) is formed as a part that is positioned on the periphery of the linking part and is connected with the main body of the components to be mounted (100) excluding the linking part.

6. The vibration-isolation structure (2, 3, 4, S) according to any one of claims 1 to 5, wherein, in a path from the vibration body contact part (2) to the peripheral part (4), a step that has a gradient with a prescribed angle relative to the contact surface that contacts the vibration body (200) of the vibration body contact part (2) is provided.

7. A shield (100) that is the component to be mounted and shields prescribed physical energy generated from the vibration body (200) and is provided with the vibration isolation structure (2, 3, 4, S) according to any one of claims 1 to 6.

## Patentansprüche

1. Schwingungsdämpfungsstruktur (2, 3, 4, S), die in einem Verbindungsteil vorgesehen ist, das einen Schwingungskörper (200) verbindet, der Schwingungen erzeugt, und vorgeschriebene Komponenten, die auf dem Schwingungskörper (200) zu montieren (100) sind, und Schwingungen unterdrückt, die vom Schwingungskörper (200) auf die zu montierenden Komponenten (100) übertragen werden, wobei
die Schwingungsdämpfungsstruktur (2, 3, 4, S) mit einem Schwingungskörper-Kontaktteil (2) versehen ist, das den Schwingungskörper (200) kontaktiert und eine Einführungsöffnung (21) aufweist, durch die ein Befestigungselement (300) zum Befestigen der zu montierenden Komponenten (100) an dem Schwingungskörper (200) eingeführt ist,
ein Umfangsteil (4), das sich am Umfang der Schwingungsdämpfungsstruktur (2, 3, 4, S) befindet,
einen Schlitz (S), der zwischen dem Schwingungskörper-Kontaktteil (2) und dem Umfangsteil (4) angeordnet ist, und
ein Brückenteil (3), das das Schwingungskörper-Kontaktteil (2) und das Umfangsteil (4) überbrückt,
der Schlitz (S) zwei Schlitze (S1, S2) umfasst, die so ausgebildet sind, dass sie das Schwingungskörper-Kontaktteil (2) in zwei Reihen umgeben,
das Brückenteil (3) ein zwischen den beiden Schlitzen (S1, S2) angeordnetes Zwischenbrückenteil (31), ein Schwingungskörper-seitiges Brückenteil (32), das das Zwischenbrückenteil (31) und das Schwingungskörper-seitige Kontaktteil (2) überbrückt, und ein Umfang-seitiges Brückenteil (33) umfasst, das das Zwischenbrückenteil (31) und das Umfangsteil (4) überbrückt, und so angeordnet ist, dass eine Schwingung vom Schwingungskörper-Kontaktteil (2) auf das Zwischenbrückenteil (31) durch das Schwingungskörper-seitige Brückenteil (32) übertragen wird, wobei, nachdem das Zwischenbrückenteil (31) umgangen wurde, die Schwingung auf das Umfangsteil (4) nach dem Durchlaufen des Umfangs-seitigen Brückenteils (33) übertragen wird,
**dadurch gekennzeichnet, dass** die beiden Schlitze (S1, S2) in Form eines Bogens ausgebildet sind, der sich entlang des Umfangs eines Kreises mit einem vorgegebenen Radius um das Einführungsloch (21) erstreckt.

2. Schwingungsdämpfungsstruktur (2, 3, 4, S) nach Anspruch 1, wobei das Umfangsteil (4) mit einer Eingriffsklaue (41) versehen ist, die gebogen wird, nachdem sie in ein Eingriffsloch (102) eingeführt worden ist, das in den zu montierenden Komponenten (100) ausgebildet ist und mit den zu montierenden Komponenten (100) in Eingriff steht, und, durch Eingriff der Eingriffsklaue (41) mit vorgeschriebenen Teilen, die Schwingungsdämpfungsstruktur (2, 3, 4 S) mit den zu montierenden Komponenten (100) integriert ist.

3. Schwingungsdämpfungsstruktur (2, 3, 4, S) nach Anspruch 2, wobei die Eingriffsklaue (41) mit einem vorgeschriebenen Teil verbunden ist, das die Schwingungsdämpfungsstruktur (2, 3, 4, S) bildet, ohne mit den zu montierenden Komponenten (100) verbunden zu sein, und
wobei ein umgebender Raum, der einen Teil der zu montierenden Komponenten (100) umgibt, innerhalb der gebogenen Eingriffsklaue (41) ausgebildet ist.

4. Schwingungsdämpfungsstruktur (2, 3, 4, S) nach Anspruch 2 oder 3, wobei auf einer radialen Linie, die sich von dem als Mittelpunkt dienenden Einführungsloch (21) ausgehend erstreckt, das Brückenteil (3) und die Eingriffsklaue (41) eine solche Positionsbeziehung zueinander aufweisen, dass sie nicht auf derselben radialen Linie positioniert sind, solange sie den Schlitz nicht sandwichartig verbinden.

5. Schwingungsdämpfungsstruktur (2, 3, 4, S) nach Anspruch 1, die im Verbindungsteil als Teil der zu montierenden Komponenten (100) vorgesehen ist, und
bei der das Umfangsteil (4) als ein Teil ausgebildet ist, das am Umfang des Verbindungsteils angeordnet ist und mit dem Hauptkörper der zu montierenden Komponenten (100) ohne das Verbindungsteil verbunden ist.

6. Schwingungsdämpfungsstruktur (2, 3, 4, S) nach einem der Ansprüche 1 bis 5, wobei in einem Weg vom Schwingungskörper-Kontaktteil (2) zum Umfangsteil (4) ein Schritt vorgesehen ist, der einen Gradienten mit einem vorgeschriebenen Winkel in Bezug auf die Kontaktfläche aufweist, die den Schwingungskörper (200) des Schwingungskörper-Kontaktteils (2) berührt.

7. Abschirmung (100), die die zu montierende Komponente ist und die die vorgeschriebene physikalische Energie abschirmt, die von dem Schwingungskörper (200) erzeugt wird, und mit der Schwingungsdämpfungsstruktur (2, 3, 4, S) nach einem der Ansprüche 1 bis 6 versehen ist.

## Revendications

1. Structure d'isolation contre les vibrations (2, 3, 4, S) prévue dans une partie de liaison qui relie un corps vibrant (200) qui génère des vibrations et des composants prescrits à monter (100) sur le corps vibrant (200), et supprime les vibrations transmises du corps vibrant (200) aux composants à monter (100), dans laquelle
ladite structure d'isolation contre les vibrations (2, 3, 4, S) est munie d'une partie de contact de corps vibrant (2) qui est en contact avec le corps vibrant (200) et présente un trou d'insertion (21) à travers lequel une fixation (300) pour fixer les composants à monter (100) au corps vibrant (200) est introduite,
une partie périphérique (4) qui est située à la périphérie de la structure d'isolation contre les vibrations (2, 3, 4, S),
une fente (S) qui est disposée entre la partie de contact du corps vibrant (2) et la partie périphérique (4), et
une partie de pont (3) qui relie la partie de contact du corps vibrant (2) et la partie périphérique (4),
la fente (S) comprenant deux fentes (S1, S2) formées de telle sorte qu'elles entourent la partie de contact du corps vibrant (2) en deux rangées,
la partie de pont (3) comprenant une partie de pont intermédiaire (31) disposée entre les deux fentes (S1, S2), une partie de pont latérale de corps vibrant (32) qui relie la partie de pont intermédiaire (31) et la partie de contact du corps vibrant (2), et une partie de pont latérale périphérique (33) qui relie la partie de pont intermédiaire (31) et la partie périphérique (4), et est agencé de telle sorte qu'une vibration provenant de la partie de contact du corps vibrant (2) est transmise à la partie de pont intermédiaire (31) par la partie de pont latérale de corps vibrant (32), après avoir contourné la partie de pont intermédiaire (31), la vibration est transmise à la partie périphérique (4) après passage par la partie de pont latérale périphérique (33),
**caractérisé en ce que** les deux fentes (S1, S2) sont formées sous la forme d'un arc qui s'étend le long de la circonférence d'un cercle ayant un rayon prescrit autour du trou d'insertion (21).

2. Structure d'isolation contre les vibrations (2, 3, 4, S) selon la revendication 1, dans laquelle la partie périphérique (4) est pourvue d'une griffe d'engagement (41) qui est pliée après avoir été insérée dans un trou d'engagement (102) formé dans les composants à monter (100) et en engagement avec les composants à monter (100), et où la structure d'isolation contre les vibrations (2, 3, 4 S) est intégrée avec les composants à monter (100) par engagement de la griffe d'engagement (41) avec les parties prescrites.

3. Structure d'isolation contre les vibrations (2, 3, 4, S) selon la revendication 2, dans laquelle la griffe d'engagement (41) est reliée à une pièce prescrite qui constitue la structure d'isolation contre les vibrations (2, 3, 4, S) sans être reliée aux composants à montér (100), et
où un espace environnant qui entoure une partie des composants à monter (100) est formé à l'intérieur de la griffe d'engagement (41) qui est pliée.

4. Structure d'isolation contre les vibrations (2, 3, 4, S) selon la revendication 2 ou 3, dans laquelle, sur une ligne radiale s'étendant à partir du trou d'insertion (21) servant de point central, la partie de pont (3) et la griffe d'engagement (41) ont une relation de position telle qu'elles ne sont pas placées sur le même axe radial tant qu'elles ne prennent pas la fente dans un logement.

5. La structure d'isolation contre les vibrations (2, 3, 4, S) selon la revendication 1, qui est prévue dans la partie de liaison comme partie des composants à monter (100), et
où la partie périphérique (4) est formée comme une partie qui est positionnée sur la périphérie de la partie de liaison et est reliée au corps principal des composants à monter (100) à l'exclusion de la partie de liaison.

6. Structure d'isolation contre les vibrations (2, 3, 4, S) selon l'une quelconque des revendications 1 à 5, dans laquelle, dans un trajet allant de la partie de contact du corps vibrant (2) à la partie périphérique (4), il est prévu une marche qui présente un gradient avec un angle prescrit par rapport à la surface de contact qui est en contact avec le corps vibrant (200) de la partie de contact du corps vibrant (2).

7. Blindage (100) qui est le composant à monter et qui protège l'énergie physique prescrite générée par le corps vibrant (200) et qui est muni de la structure d'isolation contre des vibrations (2, 3, 4, S) selon l'une quelconque des revendications 1 à 6.
